# EUROPÄISCHE PATENTSCHRIFT

(11) **EP 4 515 226 B1**
(45) Veröffentlichungstag und Bekanntmachung des Hinweises auf die Patenterteilung: **11.11.2026**
(21) Anmeldenummer: 23722559.4
(22) Anmeldetag: 27.04.2023
(51) Int. Cl.: G01N 30/60

(54) **HALTERUNG FÜR EINE KARTUSCHE UND VERFAHREN ZUM ENTFERNEN EINER KARTUSCHE EINER CHROMATOGRAPHIEVORRICHTUNG**
CARTRIDGE HOLDER AND METHOD FOR REMOVING CARTRIDGE OF CHROMATOGRAPHY APPARATUS
SUPPORT POUR UNE CARTOUCHE ET PROCÉDÉ DE RETRAIT D'UNE CARTOUCHE D'UN DISPOSITIF DE CHROMATOGRAPHIE

(30) Priorität: 28.04.2022 EP 22170431
(43) Veröffentlichungstag der Anmeldung: 05.03.2025
(73) Patentinhaber: Büchi Labortechnik AG, 9230 Flawil (CH)
(72) Erfinder: STUBER, Ruben, 8500 Frauenfeld (CH); BILGER, Stephan, 9517 Mettlen (CH)
(74) Vertreter: Hepp Wenger Ryffel AG
(86) Internationale Anmeldenummer: PCT/EP2023/061064
(87) Internationale Veröffentlichungsnummer: WO 2023/209064

(56) Entgegenhaltungen:
- WO-A1-2019/177725
- WO-A1-2019/228946
- US-A1- 2006 011 532
- US-B2- 10 094 494
- US-B2- 9 867 975

## Beschreibung

Die Erfindung betrifft eine Halterung für eine Kartusche sowie ein Verfahren zum Entfernen einer Kartusche einer Chromatographie-Vorrichtung gemäss den Oberbegriffen der unabhängigen Ansprüche.

Sogenannte Flash-Kartuschen für die präparative Aufreinigung in der Chromatographie werden üblicherweise in einer Halterung eingespannt. Die Ein- und Austritte an der Kartusche sind üblicherweise Standard Luer-Luerlock-Verbindung, wie beispielsweise bei Spritzen. Auf der Eingangsseite ist dabei normalerweise der Luer-Lock, da auf dieser Seite der höchste Druck herrscht. Auf der Ausgangsseite der Kartusche ist nur der Rest-Systemdruck zu berücksichtigen. Bis anhin wurde immer die Seite mit der Luer-Lock-Verbindung geklemmt, gebremst, verkantet oder auf eine andere Art fixiert. Das Problem dabei ist aber, dass nach Gebrauch der Kartusche dieser Teil an der Kartusche derart klemmt, dass ein plötzliches Lösen eintritt und die restlichen Medien im Raum herumspritzen. Dies verhindert einerseits ein sauberes Arbeiten, anderseits können die Lösungsmittelreste mit dem Bediener in Kontakt kommen. Dies sollte wann immer möglich vermieden werden. WO-A1-2019/228946 beschreibt eine Halterung für eine Kartusche mit Halteelement.

Es ist daher wenigstens eine Aufgabe der Erfindung die Nachteile des Standes der Technik zu überwinden. Es ist insbesondere eine Aufgabe der Erfindung eine Halterung für eine Kartusche bereitzustellen, die ein leichtes Einsetzen und Lösen der Kartusche nach Gebrauch erlaubt, simple und kostengünstig in der Herstellung ist und einen sicheren Umgang mit der Kartusche ermöglicht. Es ist auch eine Aufgabe der Erfindung, eine ergonomische und leicht handhabbare Halterung bereitzustellen. Es ist weitere eine Aufgabe, ein Verfahren zum Entfernen der Kartusche aus der Halterung bereitzustellen.

Die Aufgaben werden durch die unabhängigen Patentansprüche gelöst. Weitere Ausführungsformen ergeben sich aus den abhängigen Patentansprüchen.

Ein erster Aspekt der Erfindung betrifft eine Halterung für eine Kartusche, insbesondere für eine Kartusche in der Säulenchromatographie. Die Halterung umfasst:
- ein Haltelement zur kraft- oder reibschlüssigen Verbindung mit zumindest einem Ende einer Kartusche,
- ein Ablöseelement, ausgeführt als Abstosshülse, zum Lösen der Kartusche in Richtung einer Achse der Kartusche vom Halteelement,
- eine Bedienungsvorrichtung zum Betätigen des Ablöseelements.

Das Ablöseelement ist zwischen einer Neutralposition und einer Ablöseposition bewegbar, wobei die Kartusche am Halteelement haltbar ist, wenn sich das Ablöseelement in der Neutralposition befindet und wobei die Kartusche vom Haltelement trennbar ist, wenn sich das Ablöseelement von der Neutralposition und die Ablöseposition bewegt.

Diese erfindungsgemässe Halterung erlaubt ein besonders leichtes Einsetzen und Herauslösen der Kartusche. Das Verspritzen von Restflüssigkeiten in der Kartusche, insbesondere Lösungsmittel, kann so vermieden werden. Dies gewährleitstet wiederum ein sauberes Arbeiten und verringert den Kontakt des Benutzers mit Chemikalien.

Unter "einem Ende der Kartusche" ist der zu befestigende Teil der Kartusche zu verstehen. In handelsüblichen Kartuschen für die Chromatographie ist das üblicherweise eine Male-Luer-Verbindung.

Für einen ordnungsgemässen Betrieb werden üblicherweise beide Enden einer Kartusche mit einem Leitungssystem zum Durchleiten einer Flüssigkeit, meist unter Druck, verbunden. Im Betrieb kann dabei eine definierte Flüssigkeit in Richtung der Achse der Kartusche gepumpt werden. Typischerweise können zwei Verbindungssysteme vorliegen: i) an der Eingangs- wie Ausgangsseite der Kartusche ist die Zu- bzw. Ableitung in/aus der Kartusche mit einem Luer-Slip gelöst; ii) die Eingangsseite der Kartusche (auch Druckseite genannt) ist mit einem Luer-Lock versehen, während die Ausgangsseite der Kartusche einen Luer-Slip aufweist. Es ist aber auch möglich, dass beide Enden einen Luer-Lock aufweisen.

Es wurde festgestellt, dass es ausreicht, wenn einzig an der Luer-Verbindung eine dichte Stelle entsteht, um einen ordnungsgemässen Betrieb sicherstellen zu können.

Unter "bewegbar" ist insbesondere zu verstehen, dass das Ablöseelement schwenkbar oder drehbar zwischen einer Neutralposition und einer Ablöseposition ist.

Die Halterung kann einen Haltearm zur Befestigung der Halterung an einer Wand und/oder einem Gestell aufweisen. Auch die Befestigung an einem Gerät, wie beispielsweise einem Chromatographie-System ist möglich. Es ist aber auch denkbar, dass die Kartuschenhalterung ohne Haltearm auskommt und beispielsweise frei schwebend auf die Kartusche aufsetzbar ist.

Insbesondere kann die Bedienungsvorrichtung drehbar sein und derart mit dem Ablöseelement wirkverbunden sein, dass eine Drehbewegung der Bedienungsvorrichtung eine Bewegung des Ablöseelements aus der Neutralposition in die Ablöseposition bewirkt und/oder dass die Bedienungsvorrichtung entlang der Achse oder quer zur Achse bewegbar ist und eine Bewegung der Bedienungsvorrichtung entlang der Achse oder quer zur Achse eine Bewegung des Ablöseelements aus der Neutralposition in die Ablöseposition bewirkt.

Es ist auch möglich, dass zunächst eine Drehbewegung, gefolgt von einer Bewegung der Bedienvorrichtung entlang der Achse oder quer zur Achse der Kartusche erfolgt. Auch die umgekehrte Reihenfolge ist denkbar: Zunächst erfolgt eine Bewegung der Bedienvorrichtung entlang der Achse oder quer zur Achse der Kartusche, gefolgt von einer Drehbewegung.

Die drehbare Bedienvorrichtung ist besonders ergonomisch und ermöglicht eine einfache, insbesondere einhändige, Bedienung.

Weiter kann die Halterung eine Arretiervorrichtung zum Arretieren der Halterung an einem Gestell oder einem Gehäuse umfassen. Vorzugsweise ist die Arretiervorrichtung an einem Haltearm der Halterung angeordnet.

Die Arretiervorrichtung verhindert ein vertikales Verrutschen der Halterung und ermöglicht es, die Halterung in einer Position für den bestimmungsmässigen Gebrauch rutschfest zu arretieren.

Die Arretiervorrichtung kann dazu mindestens ein Schiebeelement mit Verzahnungen aufweisen, die mit Verzahnungen an einem Gestell oder einem Gehäuse, vorzugsweise einem Chromatographiegehäuse, in Eingriff bringbar sind. Die Verzahnungen sind vorzugsweise sowohl am Schiebeelement als auch an dem Gestell oder dem Gehäuse in Form von Zacken, Zinken oder Keilen ausgebildet, die formschlüssig in die durch die Zacken, Zinken oder Keile geformten Kerben des jeweils anderen Bauteils greifen können. Vorzugsweise sind die Verzahnungen asymmetrisch.

Es ist auch möglich ein erstes Schiebeelement und ein zweites Schiebelement bereitzustellen. Das erste und das zweite Schiebelement sind dabei derart wirkverbunden, dass eine Bewegung des ersten Schiebelements senkrecht zu einer Achse eine Bewegung des zweiten Schiebeelements von ca. 30 °C zur Achse ermöglicht. Die Verzahnungen sind dann vorzugsweise am zweiten Schiebeelement angeordnet.

Die Bedienvorrichtung kann in eine Sperrposition bringbar sein und derart mit dem mindestens einen Schiebeelement, und vorzugswiese dem ersten Schiebeelement, wirkverbunden sein, dass eine Aufwärtsbewegung der Halterung, insbesondere des Haltearms, in der Sperrposition blockiert ist.

Das mindestens eine Schiebeelement ist vorzugsweise federgelagert. Vorzugsweise sind das erste und das zweite Schiebeelment federgelagert. Beispielsweise kann das zweite Schiebelement mit einer über einen Bolzen gespannten Feder in die Verzahnungen des Gehäuses gedrückt werden. Vorzugsweise sind die Verzahnungen asymmetrisch.

Vorzugsweise weist die Bedienvorrichtung ein Drehelement auf, vorzugswiese einen Drehkopf, und das Drehelement kann von einer Anfangsposition in mindestens eine Zwischenposition und in eine Endposition in einer Umfangsrichtung drehbar sein.

Das Ablöseelement und/oder das Drehelement kann/können eine bezogen auf eine Ebene senkrecht zur Achse geneigte Rampenfläche aufweisen. Die Rampenfläche kann das Drehelement mit dem Ablöseelement derart wirkverbinden, dass eine Drehbewegung des Drehelements eine Bewegung des Ablöseelements entlang der Achse der Kartusche aus der Neutralposition in die Ablöseposition bewirkt wird.

Die Rampenfläche kann einen Winkel aufweisen, der so zu wählen ist, dass dieser in sich nicht selbsthemmend ist. Die Neigung der Rampenfläche kann in erste Näherung ein Mass dafür sein, wie leicht die Kartusche aus der Halterung lösbar ist. So kann ein flacher Winkel, beispielsweise im Verhältnis-Bereich von Länge zu maximaler Höhe der Rampenfläche 1.0:0.25 betragen, was bedeuten, dass ein grosser Drehwinkel nötig ist, was weniger Lösekraft an der Hand erfordert. Ein eher steiler Winkel, beispielsweise im Verhältnis-Bereich 1.0:0.75, benötigt mehr Handkraft, aber einen kleineren Drehwinkel. Idealerwiese beträgt die maximale Höhe der Rampenfläche 4 mm.

Mit den Rampenflächen lässt sich auf eine einfache und kostengünstige Weise ein besonders effizienter Lösemechanismus realisieren.

Vorzugsweise weisen die Rampenfläche des Drehelements eine zu der Rampenfläche des Ablöseelements zumindest teilweise formkomplementäres Kontur auf, welche besonders bevorzugt an einem separaten Gegenstück, insbesondere einer Gegenhülse, ausgebildet ist.

Das Drehelement und das Gegenstück können in der Zwischenposition derart wirkverbunden werden, dass eine nachfolgende Drehung des Drehelements in Umfangsrichtung eine Drehung des Gegenstücks in Umfangrichtung bewirkt. Bei Drehung in Umfangrichtung kann es sich beispielsweise um eine Drehung in Uhrzeigersinn als auch gegen den Uhrzeigersinn handeln.

Die Zwischenposition des Drehelements ist vorteilhafterweise nach einer Drehung von maximal 45°, ausgehend von der Anfangsposition, erreicht ist. Bei einer Drehung über 45° hinaus, können sich das Drehelement und das Gegenstück gemeinsam weiterdrehen.

Vorzugsweise ist das Drehelement der Bedienvorrichtung in die Sperrposition drehbar und derart mit dem mindestens einen Schiebeelement wirkverbunden, dass eine Aufwärtsbewegung der Halterung, und insbesondere des Haltearms am Gestell oder am Gehäuse, in der Sperrposition blockiert ist.

Weiter kann das mindestens eine Schiebeelement der Arretiervorrichtung und/oder das Drehelement eine bezogen auf eine Ebene parallel zur Achse (x) geneigte zweite Rampenfläche aufweisen. Die zweite Rampenfläche kann das Drehelement mit dem mindestens einen Schiebeelement derart wirkverbinden, dass eine Drehbewegung des Drehelements in die Sperrposition eine Bewegung des Schiebelements senkrecht zur Achse bewirkt.

Die zweite Rampenfläche des Drehelements kann dabei eine zur Rampenfläche des mindestens einen Schiebelements zumindest teilweise formkomplementäre Kontur aufweisen. Bei zwei Schiebelementen ist die Rampenfläche vorzugsweise am ersten Schiebeelement angeordnet.

Die Sperrposition ist vorzugsweise durch eine Drehung des Drehelements, ausgehend von der Anfangsposition, von mindestens 45 °C entgegen der Drehung zum Erreichen der Zwischenposition der Kartusche erreicht.

Die Halterung kann eine Rückstellfeder aufweisen und das Drehelement kann zur selbsttätigen Rückstellung in die Ausgangsposition durch die Rückstellfeder federbelastet sein. So lässt sich das Drehelement selbsttätig in die Ausgangsposition bringen.

Vorzugsweise kann die Halterung federgelagerte Stifte an der Bedienvorrichtung und insbesondere dem Drehelement aufweisen, so dass die Bedienvorrichtung automatisch wieder in die Ausgangsposition bringbar ist.

Vorzugsweise sind die federgelagerten Stifte über eine zusätzliche dritte Rampenfläche im Drehelement führbar und können in der Sperrposition in einer sich an die dritte Rampenfläche des Drehelements anschliessenden Vertiefung einrasten, so dass die Arretiervorrichtung arretiert ist.

Bei einem bestimmungsgemässen Gebrauch der Halterung können durch die Verschiebung des mindestens einen Schiebeelements die Verzahnungen mit Verzahnungen an einem Gestell oder einem Gehäuse in Eingriff treten.

Die Arretiervorrichtung ist besonders dann von Vorteil, wenn der Druck in der Kartusche zunimmt und ein unkontrolliertes Abspringen der Halterung von der Kartusche verhindert werden soll.

In einer alternativen Ausführungsform kann die Bedienvorrichtung ein Druckelement umfassen, vorzugswiese einen Druckknopf, der in Richtung der Achse oder quer zur Achse der Kartusche bewegbar gelagert ist.

Das Druckelement kann von einer Anfangsposition in eine Endposition bringbar sein.

Vorzugsweise weisen das Ablöseelement und/oder das Druckelement mindestens eine bezogen auf eine Ebene senkrecht zur Achse der Kartusche geneigte Rampenfläche auf. Die mindestens eine Rampenfläche kann das Druckelement mit dem Ablöseelement derart wirkverbinden, dass eine Bewegung des Druckelements in Richtung der Achse oder quer zur Achse der Kartusche eine Bewegung des Ablöseelements aus der Neutralposition in die Ablöseposition bewirkt. Die oben gemachten Ausführungen zum Neigungswinkel der Rampenflächen gelten hier gleichermassen.

Vorzugsweise weist die mindestens eine Rampenfläche des Druckelements eine zu der mindestens einen Rampenfläche des Ablöseelements zumindest teilweise formkomplementäres Kontur auf, welche an einem, vorzugsweise separaten, Gegenstück ausgebildet ist. Die Rampenfläche kann bei einer Bewegung der Rampenfläche entlang des Gegenstücks mit dem Ablöseelement in Wirkverbindung bringbar sein und das Ablöseelement kann aus der Neutralposition in die Ablöseposition bringbar sein. Vorzugsweise wird die Ablöseposition durch Erreichen der Endposition des Druckelements erreicht.

Das mindestens eine Schiebeelement der Arretiervorrichtung und/oder das Druckelement kann/können vorzugsweise eine bezogen auf eine Ebene parallel zur Achse geneigte zweite Rampenfläche aufweisen. Die zweite Rampenfläche kann das Druckelement mit dem mindestens einen Schiebeelement derart wirkverbinden, dass eine Bewegung des Druckelements in die Sperrposition eine Bewegung des Schiebelements senkrecht zur Achse bewirkt.

Die zweite Rampenfläche des Druckelements kann eine zu der Rampenfläche des mindestens einen Schiebeelements zumindest teilweise formkomplementäre Kontur aufweisen. Bei der Ausführung mit zwei Schiebelementen ist die Rampenfläche bevorzugt am ersten Schiebeelement angeordnet.

Im Falle der Arretiervorrichtung wird vorzugsweise die Endposition durch Erreichen der Sperrposition des Druckelements erreicht.

Die Halterung mit dem Druckelement kann eine Rückstellfeder aufweisen und das Druckelement zur selbsttätigen Rückstellung in die Ausgangsposition durch die Rückstellfeder federbelastet sein.

Das Gegenstück kann eine Gegenhülse sein.

Die Bedienvorrichtung der erfindungsgemässen Halterungen kann über einen Höhenausgleich zur Aufnahme von Kartuschen mit unterschiedlich langen Verbindungsabschnitten verfügen. Dies ermöglicht eine serienmässige Produktion ohne die Halterung individual an die verwendeten Grössen anpassen zu müssen.

Dabei kann das Gegenstück entlang der Achse der Kartusche höhenverstellbar gelagert sein und wobei insbesondere das Drehelement und das Gegenstück in der Zwischenposition derart wirkverbunden werden, dass eine Bewegung des Gegenstücks entlang der Achse verhindert wird, wenn sich das Drehelement zwischen der Zwischenposition und der Endposition befindet und wobei das Gegenstück entlang der Achse bewegbar ist, wenn sich das Drehelement in der Anfangsposition befindet.

Die Wirkverbindung, die eine Bewegung des Gegenstücks entlang der Achse verhindert, kann durch ineinander greifbare Verzahnungen zwischen dem Bedienelement und dem Gegenstück realisiert sein.

Die Verzahnungen am Bedienelement zeigen vorzugswiese in Umfangsrichtung in Richtung des Gegenstücks, während die Verzahnungen des Gegenstücks vorteilhafterweise entgegen der Umfangsrichtung in Richtung des Bedienelements zeigen. Die Verzahnung ist vorzugsweise sowohl am Bedienelement als auch am Gegenstück in Form von Zacken, Zinken oder Keilen ausgebildet, die formschlüssig in die durch die Zacken, Zinken oder Keile geformten Kerben des jeweils anderen Bauteils greifen können.

Nachfolgend wird kurz die Funktion des Höhenausgleichs in Bezug auf den Drehmechanismus näher erläutert: Wird die Kartusche in die Halterung eingespannt, kann das Ablöseelement soweit in das Drehelement gestossen werden, wie es sich aus der Luer-Verbindung, der Kartuschenkonstruktion und der Andrückkraft ergeben kann. Das Gegenstück kann um das gleiche Mass nach oben entlang der Achse der Kartusche geschoben werden und steht nun in einer definierten Höhenposition. Wird das Drehelement nun gedreht, fahren als erstes die Verzahnungen des Drehelements und des Gegenstücks zusammen, greifen entsprechend der Höhenlage des Gegenstücks ineinander (leichte Korrektur nach oben/unten um maximal eine Zahnteilung möglich) und leiten somit die restliche Drehbewegung mittels des Winkels in das Ablöseelement ein, so dass das Ablöseelement von der Neutralposition in die Ablöseposition gebracht wird. Ein Stoss nach unten ist die Folge.

Auch beim beschriebenen Druckmechanismus kann das Ablöseelement und insbesondere das Gegenstück höhenverstellbar gelagert sein. Wird die Kartusche in die Halterung eingespannt, kann das Ablöseelement soweit in die Halterung gestossen werden, wie es sich aus der Luer-Verbindung, der Kartuschenkonstruktion und der Andrückkraft ergeben kann. Das Gegenstück kann um das gleiche Mass nach oben entlang der Achse der Kartusche geschoben werden und steht nun in einer definierten Höhenposition. In jeweils diskreten Abständen sind am Gegenstück mehrere Rampenflächen, vorzugswiese drei, angebracht. Wird das Druckelement nun betätigt, schiebt sich die mindestens eine Rampenfläche des Druckelements entlang der mindestens einen Rampenfläche des Gegenstücks und drückt dabei das Gegenstück entlang der Achse der Kartusche nach unten, so dass das Ablöseelement von der Neutralposition in die Ablöseposition gebracht wird. Die Kartusche wird vom Haltelement gelöst.

In einer weiteren, aber nicht in den Ansprüchen beanspruchten Ausführungsform kann das Ablöseelement in Form eines Klemmelements, beispielsweise Klammer oder Zange, gestaltet sein und das Bedienelement in Form eines Hebels gestaltet sein, der mit dem Klemmelement verbunden ist. Das Klemmelement liegt dabei in der Neutralposition vorzugswiese auf der Kartusche auf und umschliesst bzw. umklammert einen Teil eines vorzugsweise Luer-Male-Anschlusses einer Kartusche. Durch Betätigen des an der Klemmvorrichtung vorgesehenen Hebels, ist das Klemmelement aus der Neutralposition in die Ablöseposition bewegbar und die Kartusche dadurch von der Halterung trennbar.

Vorzugsweise weist das Halteelement einen Luer-Female-Anschluss auf. Ein Luer-Female-Anschluss ist mit nahezu allen auf dem Markt befindlichen Kartuschen für chromatographische und medizinische Zwecke kompatibel.

Die Halterung kann einfach und kostengünstig mittels Spritzguss-verfahren hergestellt werden. Besonders bevorzugt sind optimierte Spritzguss-Verfahren. Bei diesen Verfahren werden in den Komponenten Versteifungen und Rippen geformt, die besondere Stabilität verleihen bei weniger Materialverbrauch.

Insbesondere sind für die Herstellung der Halterung lösemittelbeständige Kunststoffe geeignet, beispielsweise Polypropylen (PP), Polyethylen (PE), Polyetheretherketon (PEEK) oder Perfluorethylenpropylen (FEP).

Ein weiterer Aspekt der Erfindung betrifft eine Chromatographievorrichtung mit wenigstens einer Halterung wie vorhergehend beschrieben.

Umfasst die Halterung eine Arretiervorrichtung, wie vorhergehend beschrieben, so kann die Chromatographie-Vorrichtung über eine Anordnung von Verzahnungen verfügen, beispielsweise in Form einer Kette oder Leiste.

Nachfolgend wird beispielhaft die Funktion der Arretiervorrichtung mit einem Schiebeelement in Bezug auf das Drehelement und das Chromatographiegerät naher erläutert: Nachdem die Kartusche in die Halterung eingespannt wurde, kann das Drehelement in die Sperrposition gedreht werden. Dabei treten die Rampenfläche des Schiebelements und die Rampenfläche des Drehelements derart in Wirkverbindung, dass das Schiebeelement senkrecht zur Achse in Richtung des Chromatographiegeräts verschoben wird, so dass die Verzahnungen des Schiebeelements mit den Verzahnungen am Chromatographiegerät ineinandergreifen. Ein federgelagerter Stift im Drehelement arretiert das Drehelement in der Sperrposition und damit die Position des Schiebeelements.

Nachfolgend wird beispielhaft die Funktion der Arretiervorrichtung mit zwei wirkverbundenen Schiebeelementen erläutert. Nachdem die Kartusche in die Halterung eingespannt wurde, kann das Drehelement in die Sperrposition gedreht werden. Dabei treten die Rampenfläche des ersten Schiebelements und die Rampenfläche des Drehelements derart in Wirkverbindung, dass das erste Schiebeelement senkrecht zur Achse in Richtung des Chromatographiegeräts verschoben wird. Dabei erfolgt gleichtzeitig eine um 30 ° zur Achse geneigte Abwärtsbewegung des zweiten Schiebelements in Richtung des Chromtographiegeräts. Die Verzahnungen sind vorzugsweise am zweiten Schiebelement angebracht, so dass die Verzahnungen des zweiten Schiebeelements mit den Verzahnungen am Chromatographiegerät ineinandergreifen. Ein federgelagerter Stift im Drehelement arretiert das Drehelement in der Sperrposition und damit die Position des Schiebeelements.

Die Abwärtsbewegung des zweiten Schiebeelements kann beispielsweise über eine über einen Bolzen gespannten Feder ermöglicht sein. Vorzugsweise ist der Bolzen mit der Feder in der Anfangsposition des Drehelements blockiert. Durch Drehen des Drehelements und verschieben des ersten Schiebeelements wird diese Blockierung gelöst und die Feder drückt derart auf den Bolzen, dass das zweite Schiebelement in die Verzahnungen des Gehäuses gedrückt wird. Die asymmetrischen Verzahnungen führen zu einer Selbsthemmung bei einer Aufwärtsbewegung der Halterung. Gleichzeitig lassen diese eine Abwärtsbewegung zu, beispielsweise zum Nachspannen von Leckage, ohne die Lockposition zu lösen.

Ein weiterer Aspekt der Erfindung betrifft ein Verfahren zum Entfernen bzw. Lösen und insbesondere Wechseln einer Kartusche einer Chromatographievorrichtung, vorzugsweise einer Chromatographievorrichtung wie vorhergehend beschrieben mit einer Halterung für eine Kartusche wie vorhergehend beschrieben. Das Verfahren enthält die Schritte:
- optional: Bereitstellen einer Halterung wie vorhergehend beschrieben,
- Betätigen einer Bedienungsvorrichtung zum Betätigen eines Ablöseelements,
- Aufgrund der Betätigung der Bedienungsvorrichtung, Bewegen eines Ablöseelements von einer Neutralposition in einer Ablöseposition,
- Kontaktieren der Kartusche mit dem Ablöseelement während der Bewegung des Ablöseelements,
- Trennen einer kraft- oder reibschlüssigen Verbindung zwischen der Kartusche und einem Haltelement durch die Bewegung des Ablöseelements von einer Neutralposition in die Ablöseposition,
- Optionales Einsetzen einer neuen Kartusche in das Halteelement, wodurch die Bedienungsvorrichtung bevorzugt von der Ablöseposition in die Neutralposition zurückgesetzt wird.

Nachfolgend wird die Erfindung anhand von Ausführungsbeispielen näher erläutert. Dabei handelt es sich lediglich um besonders bevorzugte Ausführungsformen, die nicht einschränkend zu verstehen sind. Gleiche Referenzzeichen kennzeichnen gleiche Bauteile. Nur in einzelnen Ausführungsformen gezeigte Merkmale sind auch mit den anderen Ausführungsformen realisierbar. Es zeigen:
- Figur 1: eine perspektivische Ansicht einer ersten Ausführungsform einer erfindungsgemässen Halterung mit Gehäuse.
- Figur 2: einen Querschnitt der ersten Ausführungsform.
- Figur 3: eine perspektivische Ansicht der ersten Ausführungsform ohne Gehäuse.
- Figur 4: eine weitere perspektivische Ansicht der ersten Ausführungsform ohne Gehäuse.
- Figur 5: eine perspektivische Schnittansicht einer zweiten Ausführungsform einer erfindungsgemässen Halterung.
- Figur 6: eine zweite perspektivische Schnittansicht der zweiten Ausführungsform.
- Figur 7: eine perspektivische Innenansicht der zweiten Ausführungsform.
- Figur 8: eine zweite perspektivische Innenansicht der zweiten Ausführungsform.
- Figur 9: eine perspektivische Ansicht einer dritten Ausführungsform mit einer Arretiervorrichtung.
- Figur 10: die Ausführungsform aus Figur 9 an einem Gehäuse in nicht-arretierter Position.
- Figur 11a: eine Schnittansicht der dritten Ausführungsform.
- Figur 11b: eine detaillierte Schnittansicht des Drehelements der dritten Ausführungsform.
- Figur 12: die Position des Schiebeelements in der nicht-arretierten Position gemäss der dritten Ausführungsform.
- Figur 13: die Position des Schiebeelements in der Sperrposition.
- Figur 14: die Löseposition des Drehelements in der dritten Ausführungsform ohne Verkleidung.
- Figuren 15a-b: eine beispielhafte Ausführung und Funktion einer erfindungsgemässen Arretiervorrichtung mit zwei Schiebelementen.

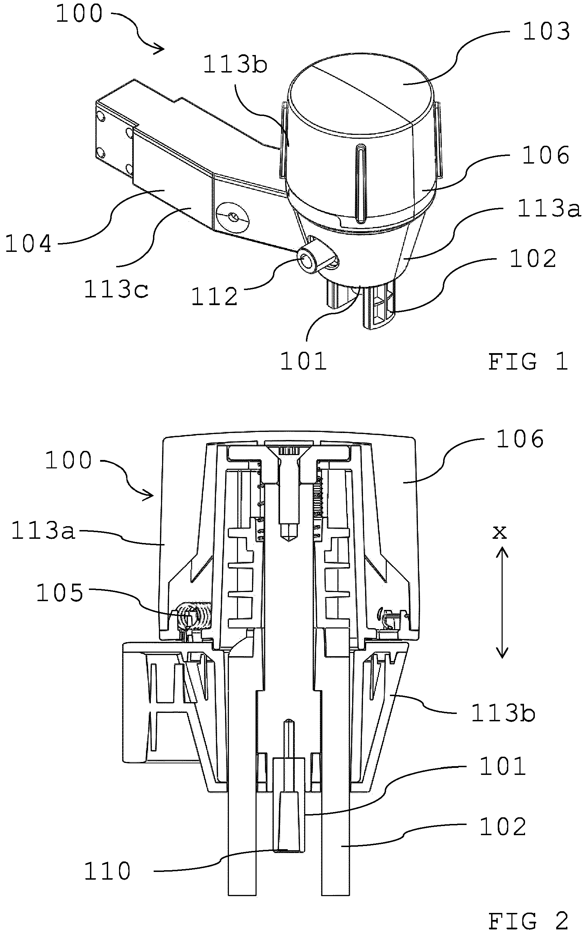

Figur 1 zeigt eine perspektivische Ansicht einer erfindungsgemässen Halterung 100. Die Halterung umfasst ein Halteelement 101 mit einem Female-Luer-Anschluss 110 (Figur 2), ein Ablöseelement 102, ein Bedienelement 103 in Form eines Drehelements 106. Die Halterung 100 ist über einen Haltearm 104 mit einer Wand, einem Gestell oder einem Gerät (nicht gezeigt) verbindbar. Das Drehelement 106, das Ablöseelement und der Haltearm sind jeweils von einer Verkleidung 113a, 113b und 113c umgeben. Die Verkleidungen sind vorzugsweise aus einem Kunststoffmaterial und mittel Spritzguss hergestellt.

Figur 2 zeigt einen Querschnitt durch die Verkleidung 113a und 113b der Halterung 100 der ersten Ausführungsform. Zusätzlich zeigt diese Figur eine Rückstellfeder 115, mit welcher das Drehelement 106 nach Betätigung selbsttätig in eine Ausgangsposition rückstellbar ist. Die Kartusche (nicht gezeigt) wird an das Haltelement 101 in Richtung der Achse der Kartusche angebracht.

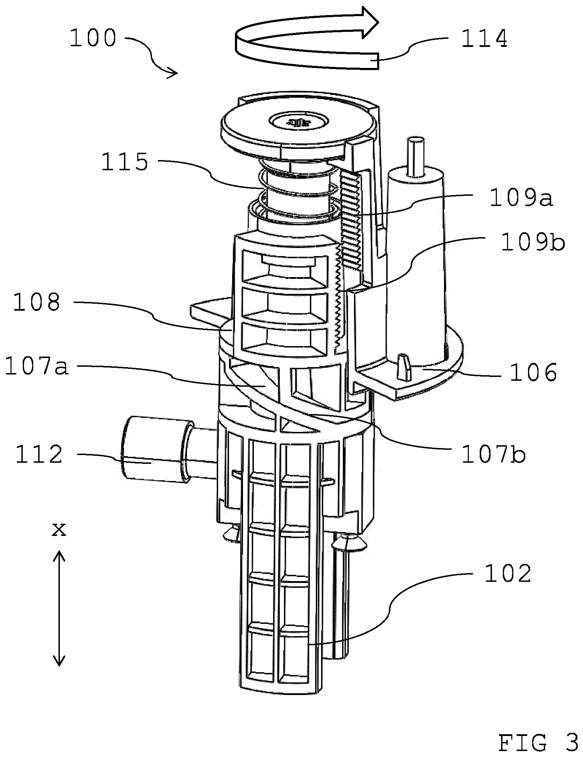

Figur 3 zeigt die erfindungsgemässe Halterung 100 ohne Gehäuse. Das Ablöseelement 102 weist eine bezogen auf eine Ebene senkrecht zur Achse x geneigte Rampenfläche 107a auf. Das Drehelement 106 ist über eine Gegenhülse 108 mit dem Ablöseelement wirkverbunden. Die Gegenhülse weist eine zur Rampenflache 107a des Ablöseelements 102 zumindest teilweise formkomplementäre Rampe 107b auf. Das Gegenstück 108 verfügt weiter über Verzahnungen 109b in Form von Zacken, die entgegen den Uhrzeigersinn in Richtung des Drehelements zeigen und mit entgegengesetzter Verzahnung 109a am Drehelement 106 ineinander greifen können. Die Verzahnungen am Drehelement zeigen in Uhrzeigersinn 114. Die Verzahnungen 109a und 109b bilden einen Teil eines Höhenausgleichs. Zu dem Höhenausgleich gehört eine Feder 115, die das Einspannen der Kartusche in die Halterung 100 ermöglicht. Des Weiteren ist ein Anschluss 112 gezeigt, der mit einer Eingangsseite einer Kartusche (nicht gezeigt) verbunden werden kann und so ein Durchleiten einer Flüssigkeit durch die Kartusche ermöglicht.

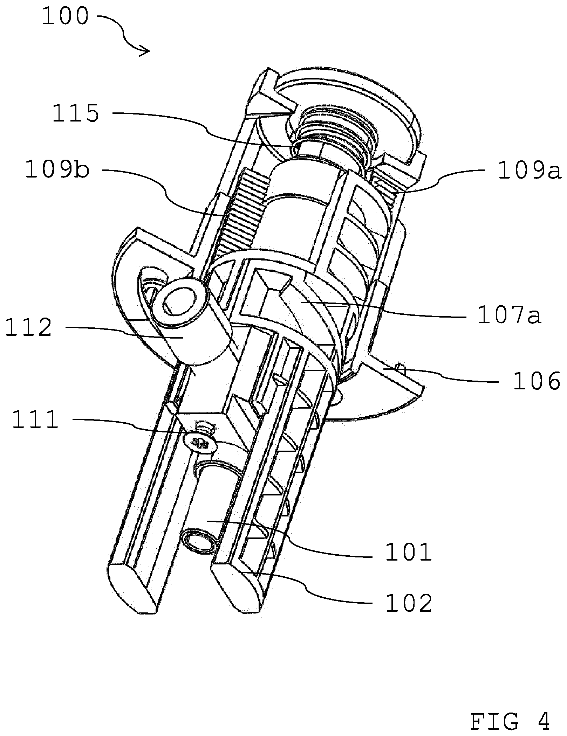

Figur 4 zeigt die erfindungsgemässe Halterung 100 ohne Verkleidung in einer weiteren perspektivischen Ansicht. Zusätzlich zu den vorgenannten Bauteilen ist eine Verschraubung 111 des Anschlusses 112 zu erkennen.

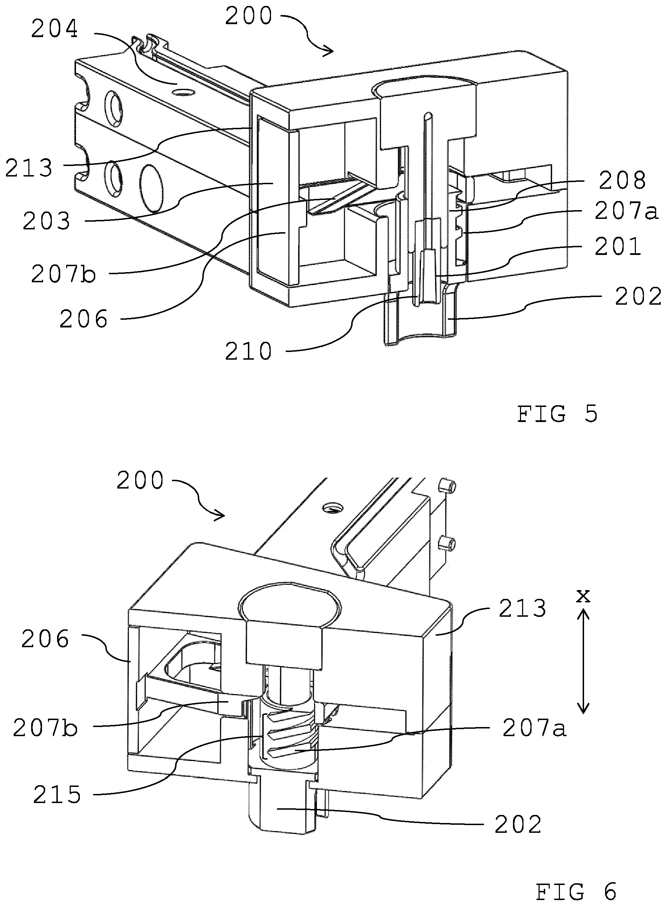

Die Figuren 5 bis 8 zeigen verschiedene Perspektiven einer zweiten Ausführungsform. Figur 5 zeigt die zweite Ausführungsform 200 in einer perspektivischen Schnittansicht. Die Halterung 200 umfasst analog zur ersten Ausführungsform (100, Figuren 1 bis 4) ein Halteelement 201 mit einem Luer-Female-Anschluss 210 und ein Ablöseelement 202. In dieser Ausführungsform ist das Bedienelement als Druckelement in Form eines Druckknopfs ausgebildet. Durch Betätigen des Druckelements 206 kann mindestens eine Rampenfläche 207b mit mindestens einer Rampenfläche 207a des Ablöseelements 202 in Wirkverbindung treten und so die Kartusche (nicht gezeigt) aus der Halterung 200 lösen. Die Rampenflächen 207a sind an einem Gegenstück 208 des Ablöseelements 202 angebracht. Die Halterung 200 ist ebenfalls über einen Haltearm 204 mit einer Wand, einem Gestell oder einem Gerät (nicht gezeigt) verbindbar. Nach aussen ist die Halterung 200 mit einer Verkleidung 213 bedeckt.

Figur 6 zeigt eine zweite perspektive Schnittansicht der zweiten Ausführungsform 200. Neben den bereits für Figur 5 beschriebenen Komponenten sind in dieser Figur mehrere Rampenflächen 207a des Ablöseelements zu erkennen. Diese Rampenflächen 207a bilden einen Höhenausgleich 215. Je nach verwendeter Kartusche wird das Gegenstück 208 unterschiedlich stark in Richtung der Achse X der Kartusche nach oben in die Halterung geschoben, so dass entweder die obere, mittlere oder untere Rampenfläche 207a beim Ablösen mit der Rampenfläche 207b des Druckelements 206 in Wirkverbindung tritt.

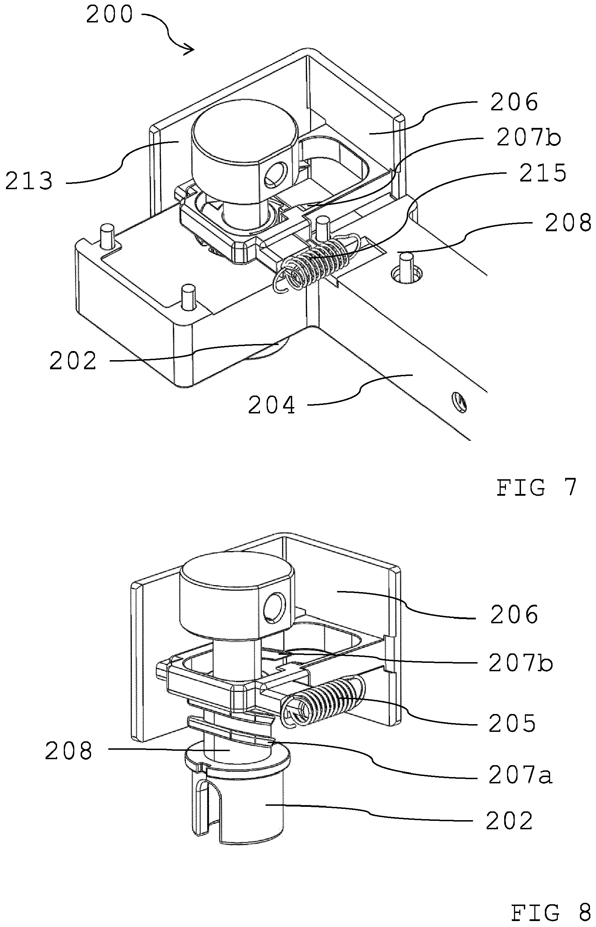

Figur 7 zeigt eine perspektivische Innenansicht der zweiten Ausführungsform. Die Verkleidung 213 ist teilweise entfernt. Diese Figur zeigt zusätzlich eine Rückstellfeder 215, die dazu dient, das Druckelement in die Ausgangsposition zu bringen. Die Ausgangsposition ist bei komplett entspannter Feder 215 gegeben.

Figur 8 zeigt eine zweite perspektivische Innenansicht der zweiten Ausführungsform 200.

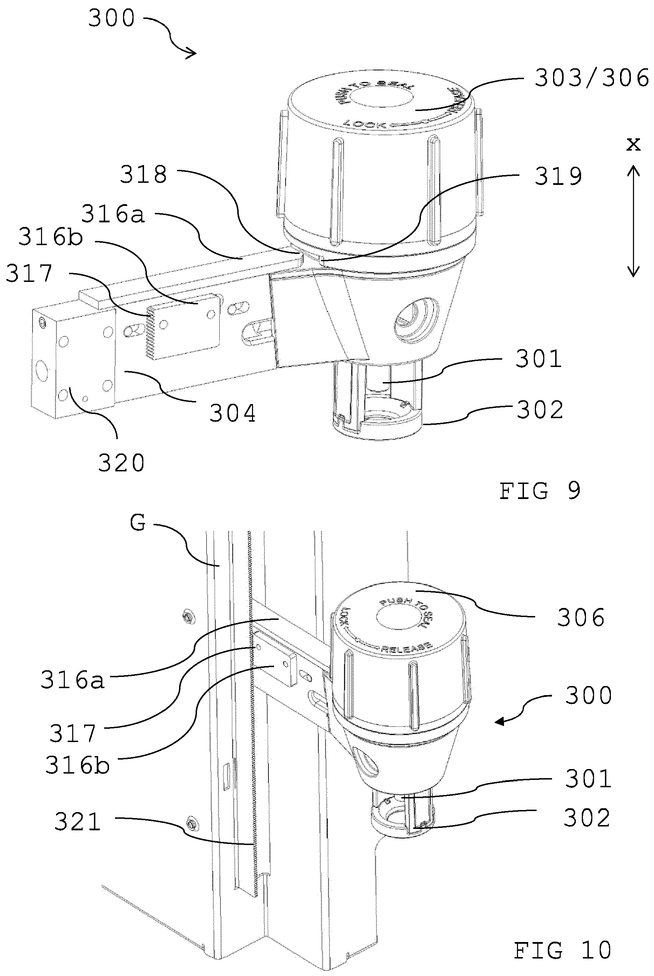

Figur 9 zeigt eine dritte Ausführungsform 300 in einer perspektivischen Ansicht. Gezeigt ist eine Halterung 300 mit einem Halteelement 301, einem Ablöseelement 302 und einem Drehelement 306 als Bedienelement 303. Die Halterung verfügt ebenfalls über einen Haltearm 304, der über einen Montageblock 320 mit einem Gestell oder einem Gehäuse (nicht gezeigt) verbindbar ist. Die Halterung 300 verfügt über eine Arretiervorrichtung umfassend ein erstes Schiebeelement 316a und eine zweites Schiebeelement 316b. Die Schiebeelemente 316a und 316b sind am Haltearm 304 angebracht. Das zweite Schiebeelement 316b verfügt über Verzahnungen 317, die mit Verzahnungen an einem Gestell oder Gehäuse in Wirkverbindung treten können. Das erste Schiebeelement 316 verfügt über eine Rampenfläche 318, die derart mit einer zweiten Rampenfläche 319 des Drehelements 306 wirkverbunden ist, dass eine Drehung des Drehelements in eine Sperrposition eine Verschiebung des Schiebelement 316 senkrecht zur Achse x bewirkt.

Figur 10 zeigt die Halterung 300 an einem Gehäuse G einer Chromatographie-Vorrichtung montiert. Das Gehäuse G weist Verzahnungen 321 auf, in welche die Verzahnungen 317 des zweiten Schiebelements 316b der Halterung 300 greifen können.

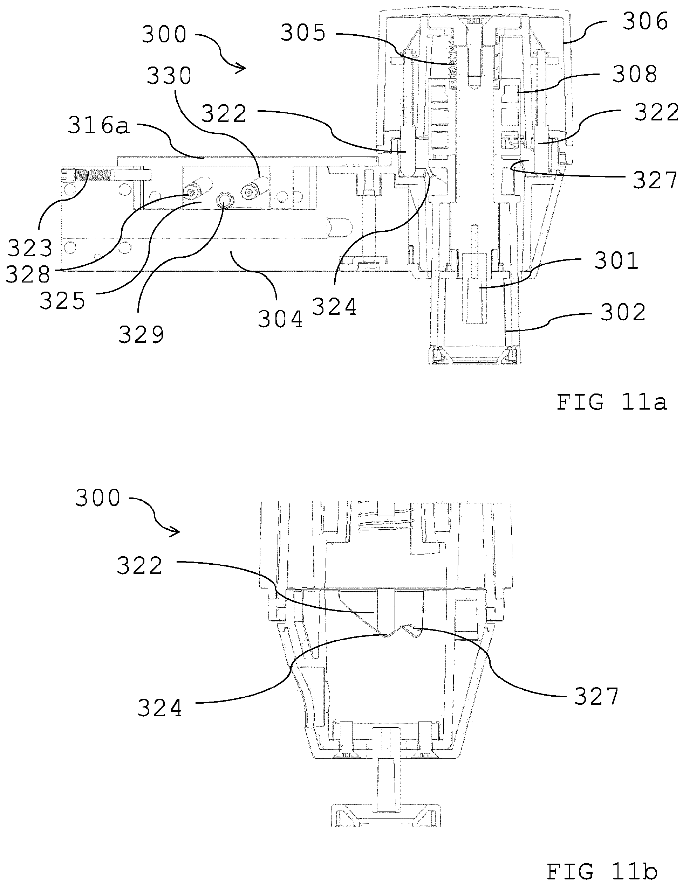

Figur 11a zeigt eine Schnittansicht der dritten Ausführungsform. Die Halterung 300 verfügt über das Halteelement 301 und das Ablöseelement 302 zum Ablösen der Kartusche. Im Inneren des Drehelements 306 sind ein Gegenstück 308 und ein Höhenausgleich 305 erkennbar. Die Rückstellung des Drehelements 306 ist in dieser Ausführungsform über federgelagerte Stifte 322 realisiert. Die federgelagerten Stifte 322 können entlang einer zusätzlichen Rampe 327 im Drehelement 306 geführt werden, wenn das Drehelement 306 in die unterschiedlichen Positionen gedreht wird. In der Sperrposition des Drehelements 306 können diese Stifte 322 in einer Vertiefung 324, welche vorzugswiese an die Rampe 327 anschliesst, verankern. Das Schiebeelement 316a ist ebenfalls über eine Rückstellfeder 323 gelagert. Des Weiteren weist das Schiebeelement 316a mindestens eine Öffnung auf, die bei Positionierung des Schiebelements 316a in die Sperrposition Raum für eine um ca. 30° geneigte Abwärtsbewegung des Schiebeelements 316b gibt. Das Schiebeelement 316b (hier nicht gezeigt) wird von mindestens einem Bolzen 328 gehalten. In der Figur wird das Schiebelement 316b von zwei Bolzen 328 gehalten. Der Bolzen 328 wird mittels einer Feder 329 entlang einer Kulisse 330 verschoben und die Verzahnungen 317 des Schiebeelements 316b (Figur 9) werden dabei in die Verzahnung des Gehäuses gedrückt.

Figur 11b zeigt eine detaillierte Schnittansicht der Halterung 300. Der Stift 322 ist in der Vertiefung 324 verankert. Die Vertiefung 324 schliesst an die Rampe 327 an.

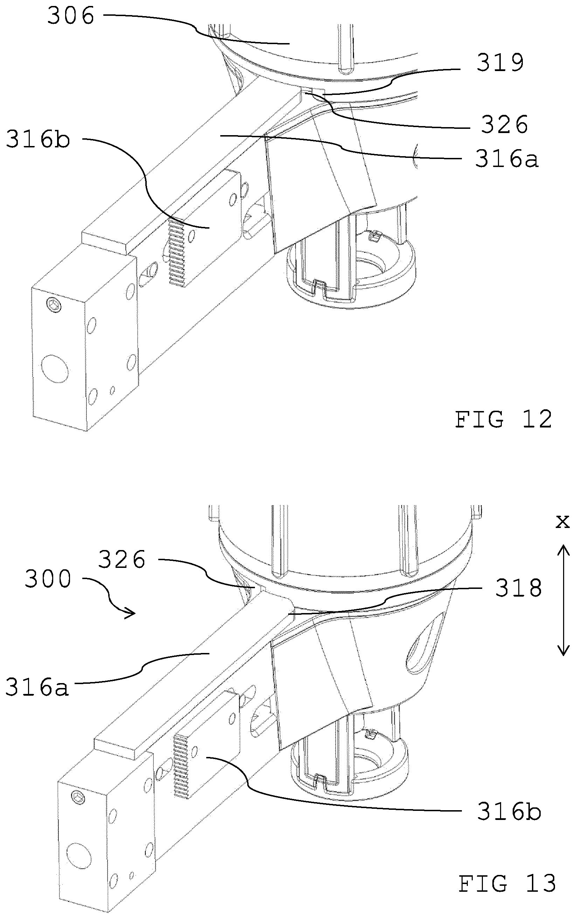

Figur 12 zeigt die Position des Schiebeelements 316a in der nicht arretierten Position. Das Ende des Schiebelements 316a ist zumindest teilweise in einer Nut 326 des Drehelements 306 angeordnet. Die zweite Rampenfläche 319 des Drehelements 306 ist ebenfalls erkennbar.

Figur 13 zeigt die Position des Schiebeelements 316a in der Sperrposition. Beim Drehen des Drehelements 306 in die Sperrposition schiebt sich die zweite Rampenfläche des Drehelements 319 entlang der Rampenfläche 318 des Schiebeelements 316a, so dass das Schiebeelement 316a aus der Nut 326 horizontal und senkrecht zur Achse x verschoben wird.

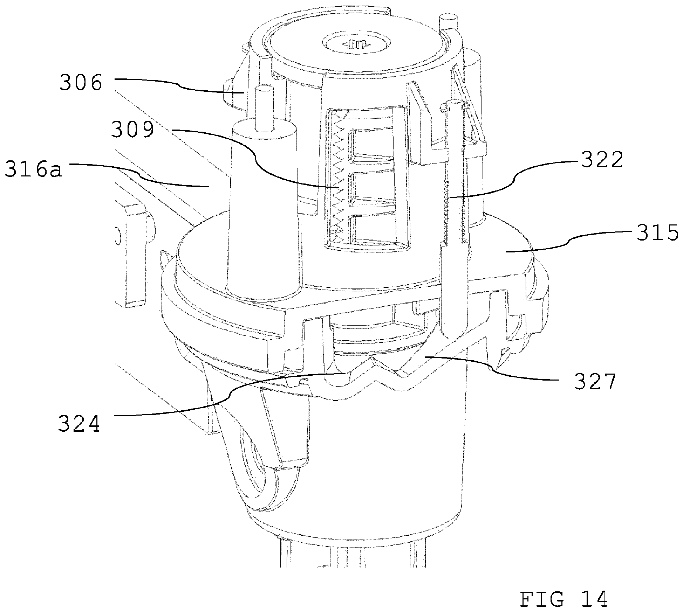

Figur 14 zeigt eine Sicht in das Innere des Drehelements 306 bei der Lösebewegung. Erkennbar ist die Rückstellfeder 315 eines der Stifte 322 und die Verzahnungen 309 des Höhenausgleichs. Ein Stift 322 befindet ist entlang der Rampe 327 geführt. An die Rampe 327 schliesst sich die Vertiefung 324 für die Sperrposition an.

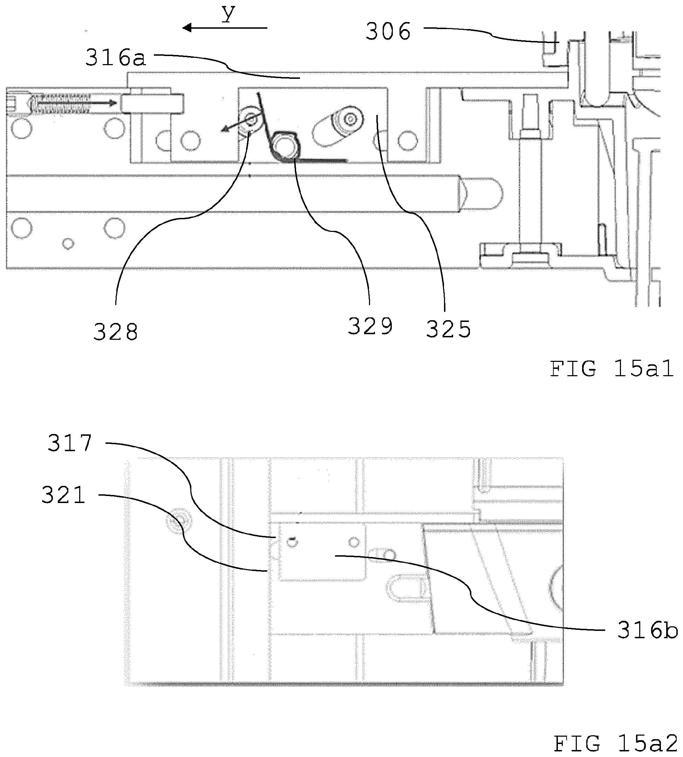

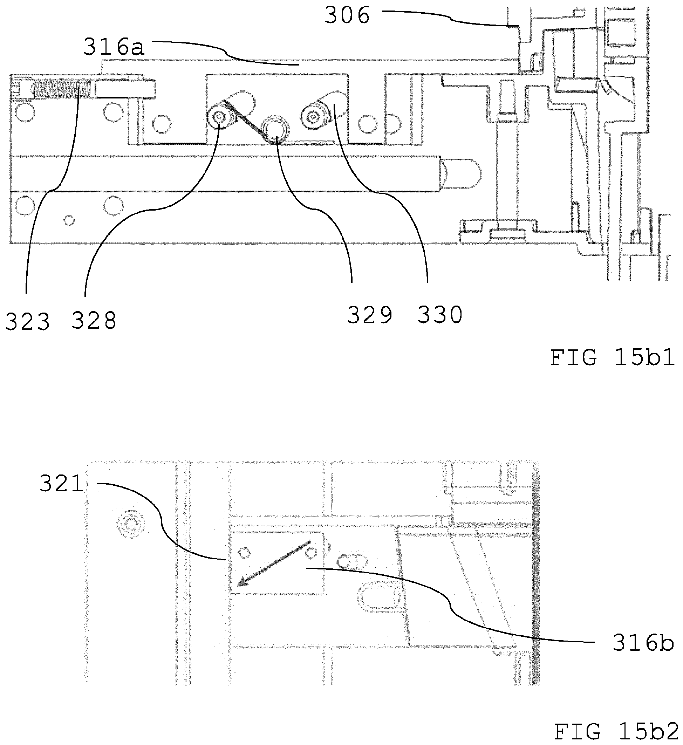

Die Figuren 15a1 bis 15b2 sollen eine beispielhafte Ausführung und Funktion einer erfindungsgemässen Arretiervorrichtung mit zwei Schiebelementen erläutern. In den Figuren 15a1 und 15a2 sind das erste Schiebeelement 316a und das zweite Schiebeelement 316b in ihrer Ausgangsposition, d.h**.** nicht-arretierten Position gezeigt. Das zweite Schiebeelements 316b greift nicht in die Verzahnungen 321 des Gehäuses. Wie in Figur 15a1 ersichtlich, ist das zweite Schiebeelement 316b (Rückseite Fig. 15a2) über eine über einen Befestigungsbolzen 328 angeordnete Schenkelfeder 329 gespannt und durch das erste Schiebelement 316a mit der Öffnung 325 gegen eine Abwärtsbewegung blockiert. Durch Drehung des Drehelements wird über das Drehelement das erste Schiebeelement 316a gegen die Federkraft der Feder 323 bewegt. Durch die Bewegung des ersten Schiebeelements 316a in Richtung y wird auch die Öffnung 325 in Richtung y verschoben und der Bolzen 328 aus seiner Blockierung gelöst. Der Schenkel der Schenkelfeder 329 drückt den Bolzen nun entlang der Kulisse 330 nach unten (Figur 15b1), wodurch das zweite Schiebeelement 316b eine um 30° nach unten geneigte Bewegung vollführt und die Verzahnungen 317 des zweiten Schiebelements 316b in die Verzahnungen 321 des Gehäuses gedrückt werden (Figur 15b2). Die Arretiervorrichtung bzw. die Schiebeelemente befinden sich nun in der Sperrposition. Beim Lösen zurück in die Anfangsposition drückt die Feder 323 auf das erste Schiebelement 316a. Das erste Schiebelement 316a wiederum drückt auf den Bolzen 328 und schiebt diesen zurück in seine Ausgangsposition, wodurch auch die Schenkelfeder 329 wieder gespannt wird.

## Patentansprüche

1. Halterung (100; 200; 300) für eine Kartusche, insbesondere für eine Kartusche in der Säulenchromatographie, umfassend
- ein Haltelement (101, 201, 301) zur kraft- oder reibschlüssigen Verbindung mit zumindest einem Ende einer Kartusche, **gekennzeichnet durch**
- eine Abstosshülse (102, 202, 302) zum Lösen der Kartusche in Richtung einer Achse (x) der Kartusche vom Halteelement (101, 201, 301),
- eine Bedienungsvorrichtung (103, 203, 303) zum Betätigen der Abstosshülse (102, 202, 302),
wobei die Abstosshülse (102, 202, 302) zwischen einer Neutralposition und einer Ablöseposition bewegbar ist, wobei die Kartusche am Halteelement (101, 201, 301) haltbar ist, wenn sich die Abstosshülse (102, 202, 302) in der Neutralposition befindet und wobei die kraft- oder reibschlüssige Verbindung zwischen der Kartusche und dem Halteelement (101, 201, 301) getrennt wird, wenn sich die Abstosshülse (102, 202, 302) von der Neutralposition in die Ablöseposition bewegt.

2. Halterung (100; 200; 300) nach Anspruch 1, wobei die Bedienungsvorrichtung (103) drehbar ist und derart mit der Abstosshülse (102, 302) wirkverbunden ist, dass eine Drehbewegung der Bedienungsvorrichtung (103, 303) eine Bewegung der Abstosshülse (102, 302) aus der Neutralposition in die Ablöseposition bewirkt
und/oder dass die Bedienungsvorrichtung (203) entlang der Achse (x) oder quer zur Achse (x) bewegbar ist und eine Bewegung der Bedienungsvorrichtung (203) entlang der Achse (x) oder quer zur Achse (x) eine Bewegung der Abstosshülse (202, 302) aus der Neutralposition in die Ablöseposition bewirkt.

3. Halterung (100, 300) nach einem der vorherigen Ansprüche, wobei die Bedienvorrichtung (103) ein Drehelement (106, 306) aufweist, vorzugswiese einen Drehkopf, und das Drehelement (106, 306) von einer Anfangsposition in mindestens eine Zwischenposition und in eine Endposition in einer Umfangsrichtung drehbar ist.

4. Halterung (100, 300) nach Anspruch3 , wobei die Abstosshülse (102, 302) und/oder das Drehelement (106, 306) eine bezogen auf eine Ebene senkrecht zur Achse (x) geneigte Rampenfläche (107a, 107b) aufweist und wobei die Rampenfläche (107a, 107b) das Drehelement (106, 306) mit der Abstosshülse (102, 302) derart wirkverbindet, dass eine Drehbewegung des Drehelements (106, 306) eine Bewegung der Abstosshülse (102, 302) entlang der Achse (x) aus der Neutralposition in die Ablöseposition bewirkt.

5. Halterung (100, 300) nach Anspruch 4, wobei die Rampenfläche (107b) des Drehelements (106, 306) eine zu der Rampenfläche (107a) der Abstosshülse (102, 302) zumindest teilweise formkomplementäre Kontur aufweist, welche vorzugsweise an einem separaten Gegenstück (108, 308), insbesondere einer Gegenhülse, ausgebildet ist.

6. Halterung nach Anspruch 5, wobei das Drehelement (106, 306) und das Gegenstück (108, 308) in der Zwischenposition derart wirkverbunden werden, dass eine nachfolgende Drehung des Drehelements (106, 306) in Umfangsrichtung eine Drehung des Gegenstücks (108, 308) in Umfangrichtung bewirkt.

7. Halterung (100, 300) nach einem der Ansprüche 2 bis 6, wobei die Halterung eine Rückstellfeder (115, 315) aufweist und das Drehelement (106, 306) zur selbsttätigen Rückstellung in die Ausgangsposition durch die Rückstellfeder (115, 315) federbelastet ist.

8. Halterung (200) nach Anspruch 1 bis 7, wobei die Bedienvorrichtung (203) ein Druckelement (206) umfasst, vorzugswiese einen Druckknopf, der in Richtung der Achse (x) oder quer zur Achse (x) bewegbar gelagert ist.

9. Halterung (200) nach Anspruch 8, wobei die Abstosshülse (202) und/oder das Druckelement (206) mindestens eine bezogen auf eine Ebene senkrecht zur Achse (x) geneigte Rampenfläche (207a, 207b) aufweist und wobei die mindestens eine Rampenfläche (207a, 207b) das Druckelement (206) mit der Abstosshülse (202) derart wirkverbindet, dass eine Bewegung des Druckelements (206) in Richtung der Achse (x) oder quer zur Achse (x) eine Bewegung der Abstosshülse (202) aus der Neutralposition in die Ablöseposition bewirkt.

10. Halterung (200) nach Anspruch 9, wobei die Abstosshülse (202) und das Druckelement (206) mindestens eine bezogen auf eine Ebene senkrecht zur Achse (x) geneigte Rampenfläche (207a, 207b) aufweisen, wobei die mindestens eine Rampenfläche (207b) des Druckelement (206) eine zu der mindestens einen Rampenfläche (207a) der Abstosshülse (202) zumindest teilweise formkomplementäres Kontur aufweist, welche an einem, vorzugsweise separaten, Gegenstück (208) ausgebildet ist, wobei die Rampenfläche (207a) bei einer Bewegung der Rampenfläche (207b) entlang des Gegenstücks (208) mit der Abstosshülse (202) in Wirkverbindung bringbar ist und die Abstosshülse (202) aus der Neutralposition in die Ablöseposition bringbar ist.

11. Halterung (100, 200, 300) nach einem der vorherigen Ansprüche, wobei die Bedienvorrichtung (103, 203, 303) über einen Höhenausgleich (105, 205, 305) zur Aufnahme von Kartuschen mit unterschiedlich langen Verbindungsabschnitten verfügt.

12. Halterung (100, 200, 300) nach Anspruch 11, wobei das Gegenstück (108; 208, 308) entlang der Achse (x) höhenverstellbar gelagert ist und wobei insbesondere das Drehelement (106, 306) und das Gegenstück (108, 308) in der Zwischenposition derart wirkverbunden werden, dass eine Bewegung das Gegenstücks (108, 308) entlang der Achse (x) verhindert wird, wenn sich das Drehelement (106, 306) zwischen der Zwischenposition und der Endposition befindet und wobei das Gegenstück (108, 308) entlang der Achse (x) bewegbar ist, wenn sich das Drehelement (106, 306) in der Anfangsposition befindet.

13. Halterung (100, 200, 300) nach Anspruch 12, wobei die Wirkverbindung, die eine Bewegung des Gegenstücks (108, 208, 308) entlang der Achse (x) verhindert, durch ineinander greifbare Verzahnungen (109a, 109b) zwischen dem Bedienelement (106, 206, 306) und dem Gegenstück (108, 208, 308) realisiert ist.

14. Chromatographievorrichtung mit wenigstens einer Halterung (100, 200, 300) gemäss einem der Ansprüche 1 bis 13.

15. Verfahren zum Entfernen und insbesondere Wechseln einer Kartusche einer Chromatographievorrichtung gemäss Anspruch 14, **gekennzeichnet durch** die Schritte
- Betätigen einer Bedienungsvorrichtung (103, 203, 303) zum Betätigen einer Abstosshülse (102, 202, 302),
- Aufgrund der Betätigung der Bedienungsvorrichtung (103, 203, 303), Bewegen einer Abstosshülse (102, 202, 302) von einer Neutralposition in einer Ablöseposition,
- Kontaktieren der Kartusche mit der Abstosshülse (102, 202, 302) während der Bewegung des Ablöseelements,
- Trennen einer kraft- oder reibschlüssigen Verbindung zwischen der Kartusche und einem Haltelement (101, 201, 301) durch die Bewegung der Abstosshülse (102, 202, 303) von einer Neutralposition in die Ablöseposition,
- Optionales Einsetzen einer neuen Kartusche in das Halteelement (101, 201, 301), wodurch die Bedienungsvorrichtung (103, 203, 303) bevorzugt von der Ablöseposition in die Neutralposition zurückgesetzt wird.

## Claims

1. A holder (100; 200; 300) for a cartridge, in particular for a cartridge in column chromatography, comprising
- a holding element (101, 201, 301) for force-fitting or frictionally locking connection to at least one end of a cartridge, **characterised by**
- an ejector sleeve (102, 202, 302) for releasing the cartridge from the holding element (101, 201, 301) in the direction of an axis (x) of the cartridge,
- an operating device (103, 203, 303) for actuating the ejector sleeve (102, 202, 302),
wherein the ejector sleeve (102, 202, 302) is movable between a neutral position and a release position, wherein the cartridge is retainable on the holding element (101, 201, 301) when the ejector sleeve (102, 202, 302) is in the neutral position and wherein the force-fitting or frictionally locking connection between the cartridge and the holding element (101, 201, 301) is separated when the ejector sleeve (102, 202, 302) moves from the neutral position to the release position.

2. The holder (100; 200; 300) according to claim 1, wherein the operating device (103) is rotatable and is operatively connected to the ejector sleeve (102, 302) in such a way that a rotary movement of the operating device (103, 303) causes a movement of the ejector sleeve (102, 302) from the neutral position into the release position
and/or wherein the operating device (203) is movable along the axis (x) or transversely to the axis (x) and a movement of the operating device (203) along the axis (x) or transversely to the axis (x) causes a movement of the ejector sleeve (202, 302) from the neutral position into the release position.

3. The holder (100, 300) according to any one of the preceding claims, wherein the operating device (103) comprises a rotary element (106, 306), preferably a rotary knob, and the rotary element (106, 306) is rotatable from an initial position into at least one intermediate position and into an end position in a circumferential direction.

4. The holder (100, 300) according to claim 3, wherein the ejector sleeve (102, 302) and/or the rotary element (106, 306) has a ramp surface (107a, 107b) inclined relative to a plane perpendicular to the axis (x) and wherein the ramp surface (107a, 107b) operatively connects the rotary element (106, 306) to the ejector sleeve (102, 302) in such a way that a rotary movement of the rotary element (106, 306) causes a movement of the ejector sleeve (102, 302) along the axis (x) from the neutral position into the release position.

5. The holder (100, 300) according to claim 4, wherein the ramp surface (107b) of the rotary element (106, 306) has a contour which is at least partially complementary in shape to the ramp surface (107a) of the ejector sleeve (102, 302) and which is preferably formed on a separate counterpart (108, 308), in particular a counter sleeve.

6. The holder according to claim 5, wherein the rotary element (106, 306) and the counterpart (108, 308) are operatively connected in the intermediate position in such a way that a subsequent rotation of the rotary element (106, 306) in the circumferential direction causes a rotation of the counterpart (108, 308) in the circumferential direction.

7. The holder (100, 300) according to any one of claims 2 to 6, wherein the holder has a return spring (115, 315) and the rotary element (106, 306) is spring-loaded by the return spring (115, 315) for automatic return to the starting position.

8. The holder (200) according to any one of claims 1 to 7,
wherein the operating device (203) comprises a pressure element (206), preferably a push button, which is mounted so as to be movable in the direction of the axis (x) or transversely to the axis (x).

9. The holder (200) according to claim 8, wherein the ejector sleeve (202) and/or the pressure element (206) has at least one ramp surface (207a, 207b) inclined relative to a plane perpendicular to the axis (x) and wherein the at least one ramp surface (207a, 207b) operatively connects the pressure element (206) to the ejector sleeve (202) in such a way that a movement of the pressure element (206) in the direction of the axis (x) or transversely to the axis (x) causes a movement of the ejector sleeve (202) from the neutral position into the release position.

10. The holder (200) according to claim 9, wherein the ejector sleeve (202) and the pressure element (206) have at least one ramp surface (207a, 207b) inclined relative to a plane perpendicular to the axis (x), wherein the at least one ramp surface (207b) of the pressure element (206) has a contour which is at least partially complementary in shape to the at least one ramp surface (207a) of the ejector sleeve (202) and which is formed on a, preferably separate, counterpart (208), wherein the ramp surface (207a) can be brought into operative connection with the ejector sleeve (202) during a movement of the ramp surface (207b) along the counterpart (208) and the ejector sleeve (202) can be brought from the neutral position into the release position.

11. The holder (100, 200, 300) according to any one of the preceding claims, wherein the operating device (103, 203, 303) has a height equaliser (105, 205, 305) for accommodating cartridges with connecting sections of different lengths.

12. The holder (100, 200, 300) according to claim 11, wherein the counterpart (108; 208, 308) is mounted so as to be vertically adjustable along the axis (x) and wherein in particular the rotary element (106, 306) and the counterpart (108, 308) are operatively connected in the intermediate position in such a way that a movement of the counterpart (108, 308) along the axis (x) is prevented when the rotary element (106, 306) is located between the intermediate position and the end position and wherein the counterpart (108, 308) is movable along the axis (x) when the rotary element (106, 306) is located in the initial position.

13. The holder (100, 200, 300) according to claim 12, wherein the operative connection, which prevents a movement of the counterpart (108, 208, 308) along the axis (x), is realised by interengageable toothing (109a, 109b) between the operating element (106, 206, 306) and the counterpart (108, 208, 308).

14. A chromatography apparatus comprising at least one holder (100, 200, 300) according to any one of claims 1 to 13.

15. A method for removing, and in particular replacing, a cartridge of a chromatography apparatus according to claim 14, **characterised by** the steps of
- actuating an operating device (103, 203, 303) for actuating an ejector sleeve (102, 202, 302),
- due to the actuation of the operating device (103, 203, 303), moving an ejector sleeve (102, 202, 302) from a neutral position to a release position,
- contacting the cartridge with the ejector sleeve (102, 202, 302) during the movement of the release element,
- separating a force-fitting or frictionally locking connection between the cartridge and a holding element (101, 201, 301) by the movement of the ejector sleeve (102, 202, 303) from a neutral position to the release position,
- optionally inserting a new cartridge into the holding element (101, 201, 301), whereby the operating device (103, 203, 303) is preferably reset from the release position to the neutral position.

## Revendications

1. Support (100 ; 200 ; 300) pour une cartouche, en particulier pour une cartouche en chromatographie sur colonne, comprenant
- un élément de maintien (101, 201, 301) destiné à une liaison par complémentarité de force ou par friction avec au moins une extrémité d'une cartouche, **caractérisé par**
- un manchon éjecteur (102, 202, 302) destiné à libérer la cartouche de l'élément de maintien (101, 201, 301) dans la direction d'un axe (x) de la cartouche,
- un dispositif de commande (103, 203, 303) destiné à actionner le manchon éjecteur (102, 202, 302),
dans lequel le manchon éjecteur (102, 202, 302) est mobile entre une position neutre et une position de libération, dans lequel la cartouche peut être maintenue sur l'élément de maintien (101, 201, 301) lorsque le manchon éjecteur (102, 202, 302) se trouve dans la position neutre et dans lequel la liaison par complémentarité de force ou par friction entre la cartouche et l'élément de maintien (101, 201, 301) est rompue lorsque le manchon éjecteur (102, 202, 302) se déplace de la position neutre à la position de libération.

2. Support (100 ; 200 ; 300) selon la revendication 1, dans lequel le dispositif de commande (103) est mobile en rotation et est relié fonctionnellement au manchon éjecteur (102, 302) de telle sorte qu'un mouvement de rotation du dispositif de commande (103, 303) provoque un mouvement du manchon éjecteur (102, 302) de la position neutre à la position de libération
et/ou dans lequel le dispositif de commande (203) est mobile le long de l'axe (x) ou transversalement à l'axe (x) et un mouvement du dispositif de commande (203) le long de l'axe (x) ou transversalement à l'axe (x) provoque un mouvement du manchon éjecteur (202, 302) de la position neutre à la position de libération.

3. Support (100, 300) selon l'une quelconque des revendications précédentes, dans lequel le dispositif de commande (103) comporte un élément rotatif (106, 306), de préférence un bouton rotatif, et l'élément rotatif (106, 306) est mobile en rotation d'une position initiale jusqu'à au moins une position intermédiaire et jusqu'à une position finale dans une direction circonférentielle.

4. Support (100, 300) selon la revendication 3, dans lequel le manchon éjecteur (102, 302) et/ou l'élément rotatif (106, 306) présente une surface de rampe (107a, 107b) inclinée par rapport à un plan perpendiculaire à l'axe (x) et dans lequel la surface de rampe (107a, 107b) relie fonctionnellement l'élément rotatif (106, 306) au manchon éjecteur (102, 302) de telle sorte qu'un mouvement de rotation de l'élément rotatif (106, 306) provoque un mouvement du manchon éjecteur (102, 302) le long de l'axe (x) de la position neutre à la position de libération.

5. Support (100, 300) selon la revendication 4, dans lequel la surface de rampe (107b) de l'élément rotatif (106, 306) présente un contour de forme au moins partiellement complémentaire de la surface de rampe (107a) du manchon éjecteur (102, 302), lequel contour est de préférence formé sur une contre-pièce (108, 308) distincte, en particulier un contremanchon.

6. Support selon la revendication 5, dans lequel l'élément rotatif (106, 306) et la contre-pièce (108, 308) sont reliés fonctionnellement dans la position intermédiaire de telle sorte qu'une rotation ultérieure de l'élément rotatif (106, 306) dans la direction circonférentielle provoque une rotation de la contre-pièce (108, 308) dans la direction circonférentielle.

7. Support (100, 300) selon l'une quelconque des revendications 2 à 6, dans lequel le support comporte un ressort de rappel (115, 315) et l'élément rotatif (106, 306) est sollicité par le ressort de rappel (115, 315) pour son rappel automatique dans la position de départ.

8. Support (200) selon l'une quelconque des revendications 1 à 7, dans lequel le dispositif de commande (203) comprend un élément de pression (206), de préférence un bouton-poussoir, qui est monté mobile dans la direction de l'axe (x) ou transversalement à l'axe (x).

9. Support (200) selon la revendication 8, dans lequel le manchon éjecteur (202) et/ou l'élément de pression (206) présente au moins une surface de rampe (207a, 207b) inclinée par rapport à un plan perpendiculaire à l'axe (x) et dans lequel l'au moins une surface de rampe (207a, 207b) relie fonctionnellement l'élément de pression (206) au manchon éjecteur (202) de telle sorte qu'un mouvement de l'élément de pression (206) dans la direction de l'axe (x) ou transversalement à l'axe (x) provoque un mouvement du manchon éjecteur (202) de la position neutre à la position de libération.

10. Support (200) selon la revendication 9, dans lequel le manchon éjecteur (202) et l'élément de pression (206) présentent au moins une surface de rampe (207a, 207b) inclinée par rapport à un plan perpendiculaire à l'axe (x), dans lequel l'au moins une surface de rampe (207b) de l'élément de pression (206) présente un contour de forme au moins partiellement complémentaire de l'au moins une surface de rampe (207a) du manchon éjecteur (202), lequel contour est formé sur une contre-pièce (208), de préférence distincte, dans lequel la surface de rampe (207a) peut être mise en liaison fonctionnelle avec le manchon éjecteur (202) lors d'un mouvement de la surface de rampe (207b) le long de la contre-pièce (208) et le manchon éjecteur (202) peut être amené de la position neutre à la position de libération.

11. Support (100, 200, 300) selon l'une quelconque des revendications précédentes, dans lequel le dispositif de commande (103, 203, 303) dispose d'un compensateur de hauteur (105, 205, 305) destiné à recevoir des cartouches présentant des sections de raccordement de longueurs différentes.

12. Support (100, 200, 300) selon la revendication 11, dans lequel la contre-pièce (108 ; 208, 308) est montée de manière réglable en hauteur le long de l'axe (x) et dans lequel, en particulier, l'élément rotatif (106, 306) et la contre-pièce (108, 308) sont reliés fonctionnellement dans la position intermédiaire de telle sorte qu'un mouvement de la contre-pièce (108, 308) le long de l'axe (x) est empêché lorsque l'élément rotatif (106, 306) se trouve entre la position intermédiaire et la position finale et dans lequel la contre-pièce (108, 308) est mobile le long de l'axe (x) lorsque l'élément rotatif (106, 306) se trouve dans la position initiale.

13. Support (100, 200, 300) selon la revendication 12, dans lequel la liaison fonctionnelle qui empêche un mouvement de la contre-pièce (108, 208, 308) le long de l'axe (x) est réalisée par des dentures (109a, 109b) pouvant s'engager les unes dans les autres entre l'élément de commande (106, 206, 306) et la contre-pièce (108, 208, 308).

14. Dispositif de chromatographie comprenant au moins un support (100, 200, 300) selon l'une quelconque des revendications 1 à 13.

15. Procédé de retrait, et en particulier de remplacement, d'une cartouche d'un dispositif de chromatographie selon la revendication 14, **caractérisé par** les étapes suivantes :
- actionnement d'un dispositif de commande (103, 203, 303) destiné à actionner un manchon éjecteur (102, 202, 302),
- sous l'effet de l'actionnement du dispositif de commande (103, 203, 303), déplacement d'un manchon éjecteur (102, 202, 302) d'une position neutre à une position de libération,
- mise en contact de la cartouche avec le manchon éjecteur (102, 202, 302) pendant le mouvement de l'élément de libération,
- rupture d'une liaison par complémentarité de force ou par friction entre la cartouche et un élément de maintien (101, 201, 301) par le mouvement du manchon éjecteur (102, 202, 303) d'une position neutre à la position de libération,
- insertion optionnelle d'une nouvelle cartouche dans l'élément de maintien (101, 201, 301), moyennant quoi le dispositif de commande (103, 203, 303) est de préférence ramené de la position de libération à la position neutre.
